# DEMANDE DE BREVET EUROPEEN

(11) **EP 3 106 304 A1**
(43) Date de publication de la demande: **21.12.2016**
(21) Numéro de dépôt: 15172969.6
(22) Date de dépôt: 19.06.2015
(51) Int. Cl.: B32B 17/10

(54) **VITRAGE FEUILLETÉ**

(71) Demandeur: AGC Glass Europe, 1348 Louvain-la-Neuve (BE)
(72) Inventeur: Hubert, Renaud, 5300 Landenne (BE); Sartenaer, Yannick, 5020 Vedrin (BE); Timmermans, Tanguy, 1150 Bruxelles (Woluwé-St-Pierre) (BY); Boland, François, 5030 Gembloux (BE); Lambricht, Thomas, 1360 Perwez (BE); Domerq, Benoît, 1420 Braine-l'Alleud (BE); Dogimont, Audrey, 1495 Sart-Dames-Avelines (BE)
(74) Mandataire: Chabou, Samia

(57) **Abrégé**

L'invention concerne un vitrage feuilleté (10) comprenant (i) une première feuille de verre externe (11), (ii) un film fonctionnel alimenté électriquement (12), (iii) un moyen pour réfléchir les infrarouges (13) disposé entre la première feuille de verre (11) et le film fonctionnel (13), (iv)au moins un premier intercalaire thermoplastique (20) disposé entre le moyen pour réfléchir les rayonnements infrarouges (13) et le film fonctionnel (12), et (v) une seconde feuille de verre externe(16).

Selon l'invention, le vitrage feuilleté (10) comprend au moins la première feuille externe (11) qui présente une réflexion infrarouge RIR_{V} telle que RIR_{V} ≥ 1.087 * TL_{V}, TL_{V} étant la transmission lumineuse de la feuille de verre, et en ce que le moyen pour réfléchir les infrarouges (13) est caractérisée par une transmission lumineuse TL_{C} telle que TL_{C} ≥ 1.3 * TIR_{C}, TIR_{C} étant la transmission infrarouge du moyen pour réfléchir les rayonnements infrarouges..

## Description

La présente invention concerne un vitrage feuilleté, en particulier un vitrage feuilleté destiné à être utilisé en tant que vitrage dynamique.

L'invention est d'abord destinée à l'application aux vitrages automobile, elle concerne aussi les autres sortes de vitrages et de façon générale tous les vitrages comprenant un film fonctionnel, en particulier lorsque ceux-ci présentent dans leur constitution ou dans leur mise en oeuvre, des contraintes notamment en matière de traitements thermiques. Par exemple, dans le domaine architectural de tels vitrages sont des vitrages dynamiques qui se teintent notamment électroniquement à volonté pour protéger contre la chaleur du soleil et l'éblouissement. Dans le domaine du bâtiment, les vitrages intelligents, encore appelés « smart windows » sont composés d'une couche d'électrochrome, de photochrome, thermochrome... emprisonnée en sandwich entre deux électrodes transparentes, puis deux feuilles de verre. Commandées électriquement, ces fenêtres peuvent à volonté s'obscurcir quand le temps est ensoleillé afin d'éviter le passage de la lumière dans une pièce, ou s'éclaircir lorsque le temps est nuageux afin de maximiser de nouveau le passage de la lumière. Cependant, pour ce type d'application, il est fortement recommandé de tremper les feuilles de verre afin d'éviter que le verre ne casse suite à un choc thermique et ceci particulièrement lorsque le film fonctionnel utilisé est un film hautement absorbant tel que les films électrochromes, photochromes, thermochromes...

Dans le domaine automobile, de tels vitrages sont utilisés par exemple en tant que toit, pare-brise, lunette arrière, vitre latérale d'un véhicule. En particulier, les toits vitrés se substituent pour une part croissante aux toits traditionnels qui font partie de la carrosserie des véhicules. Comme pour le domaine architectural, le choix de ces toits est le fait des constructeurs d'offrir à leurs clients cette option donnant l'impression de l'ouverture du véhicule vers l'extérieur, à la manière d'un cabriolet, sans avoir les inconvénients de ces derniers, les toits maintenant le confort d'une berline traditionnelle. Pour cela, les toits vitrés doivent satisfaire à de nombreuses exigences.

Tout comme les vitrages dynamiques pour le domaine architectural, le choix de toits vitrés a notamment pour but le gain de luminosité dans l'habitacle. Ce gain ne doit pas aller à l'encontre d'autres propriétés qui assurent le confort des passagers ou des occupants des bâtiments, en particulier le confort thermique et le confort acoustique. Ce dernier est conservé voire amélioré par la présence de la structure feuilletée, en particulier lorsque celle-ci comporte des intercalaires choisis pour leur capacité d'amortissement des vibrations, sur le modèle de ce qui est mis en oeuvre notamment pour les vitrages des pare-brise.

La présence de toits vitrés ou de vitrages dynamiques, motivée par l'augmentation de la luminosité, conduit à l'accroissement des transferts thermiques avec l'extérieur. Ceci est sensible dans le mécanisme d'effet de serre lorsque le véhicule ou le bâtiment est exposé à un rayonnement solaire intense, mais aussi dans les pertes thermiques de l'habitacle ou le bâtiment en période froide.

Le contrôle des conditions thermiques conduit à diverses mesures dont l'utilisation de vitrages à forte sélectivité. Ces conditions résultent du choix des verres utilisés (le plus souvent minéraux, mais qui peuvent aussi être organiques). Elles sont aussi le fait des filtres additionnels que comportent ces vitrages, notamment ceux constitués par des systèmes de couches réfléchissant principalement les infrarouges. L'art antérieur fait état de solutions répondant à ces exigences. C'est le cas en particulier du brevet EP1200256.

Par ailleurs, le souhait d'un accroissement de luminosité dans l'habitacle ou le bâtiment n'est pas nécessairement permanent. L'utilisateur peut, selon le moment, préférer une luminosité moindre, ou simplement maintenir le caractère «privatif».

Pour modifier la transmission lumineuse des vitrages en fonction des conditions d'utilisation, des solutions ont été proposées antérieurement. Il s'agit notamment des vitrages dits «électro-commandés», tels que les vitrages comportant des films fonctionnels tels que des moyens électrochromes dans lesquels la variation est obtenue par modification de l'état d'ions colorés dans des compositions incluses dans ces vitrages. Il s'agit aussi de vitrages comprenant des couches de particules en suspension, qui selon l'application d'une tension électrique sont ordonnées ou non tels que les systèmes dits SPD (pour «suspended particles devices») ou encore un film de type cristaux liquide (LC), constitués d'un polymère contenant les cristaux liquides sensibles à l'application de la tension électrique.

En particulier, ces films fonctionnels s'ils permettent une modification de l'intensité de la luminosité dans l'habitacle ou le bâtiment, ils ont aussi pour fonction, de modifier le caractère privatif et l'effet anti-éblouissement. Ces films ont également pour rôle de protéger contre la chaleur à l'intérieur de l'habitacle ou du bâtiment. En particulier, ces films fonctionnels sont des films commutables entre un état sombre et un état translucide voire transparent ou encore qui sont capables de fournir une fonction d'éclairage à l'intérieur d'un véhicule ou d'un bâtiment dans lequel le vitrage est monté.

Dans la littérature antérieure, l'utilisation de films à cristaux liquides dans des vitrages a été envisagée pour la constitution de parois d'isolement visuel commandé. Dans ces applications, la fonction principale est la transformation d'un vitrage essentiellement transparent en un vitrage simplement translucide. Ces applications n'impliquaient pas de caractéristiques thermiques spécifiques. De même, la transmission lumineuse n'était pas déterminante.

Il est connu aussi dans la littérature, des exemples de vitrages comprenant un film SPD. De tels vitrages sont par exemple décrits dans les documents WO2005/102688 et DE 100 43 141. Le film est commutable entre un état sombre (en l'absence de tension appliquée) et un état très transparent (lorsqu'une tension est appliquée).

De manière générale, que ce soit un film fonctionnel de type SPD ou de cristaux liquides (LC) ou un film comprenant des diodes électroluminescentes ou encore électrochrome, photochrome, thermochrome, celui-ci est laminé dans une structure de vitrage laminé grâce à au moins un intercalaire thermoplastique. Cette mise en oeuvre est par exemple décrite dans le document US2004/0257649.

De tels vitrages feuilletés ayant des propriétés variables de transmission de la lumière due à l'inclusion d'un film de cristaux liquides (LC) ou un film SPD ou électrochrome... sont de plus en plus recherchés en raison de l'amélioration du confort du passager ou de l'occupant du bâtiment. En effet, une fois monté dans un véhicule ou un bâtiment, ce vitrage muni d'un tel film permet de diminuer la chaleur dans l'habitacle du véhicule ou le bâtiment, mais permet également d'adapter la luminosité souhaitée à l'intérieur du véhicule ou du bâtiment.

Malheureusement, ces films fonctionnels, lorsqu'ils sont intégrés dans un vitrage feuilleté s'altèrent du fait de leur sensibilité aux températures élevées dans une mesure telle que la performance de chacun est affectée.

De manière générale dans la préparation de tels vitrages feuilletés selon l'invention, et en particulier des toits de véhicule, il convient de considérer l'aptitude des éléments constitutifs à supporter les traitements qui conduisent à la mise en forme et à l'assemblage du vitrage. En pratique, les films fonctionnels tels que SPDs ou encore de cristaux liquides (PDLC) ou autres sont sensibles à l'élévation de la température. Au-delà de 70°C, ils ne sont en général plus commandés par les variations de champs électriques. Lorsque le film fonctionnel est soumis à une exposition prolongée à la chaleur, notamment à des températures supérieures à 70°C, et plus particulièrement supérieure à 80°C, le film fonctionnel (PDLC, SPD, ...) peut être endommagé (altération du film et par exemple de la fonction de commutation).

Une exposition à de telles températures prolongée résulte notamment de l'application d'un champ électrique pour activer le film et/ou de la chaleur provenant de la feuille externe (transmission directe ou réémission de chaleur suite à une absorption trop élevée) et/ou du rayonnement solaire ou encore la couche d'émail dans le cas d'un véhicule.

Ainsi, le film fonctionnel lorsqu'il est intégré dans un vitrage feuilleté et positionné sur un véhicule, notamment en tant que toit vitré, ou dans un bâtiment, doit avantageusement résister à des températures élevées pouvant atteindre des températures supérieures à 85°C. Au-delà de cette température, et pour une exposition prolongée, le film fonctionnel s'altère. Cette température est notamment atteinte lorsque le film fonctionnel est en position active (position ON). Ainsi, le film fonctionnel lorsqu'il est intégré dans un vitrage multiple doit être protégé des élévations de températures.

Ainsi, l'invention s'intéresse à tout vitrage feuilleté trempé ou non qui comprend un film fonctionnel sensible à la chaleur.

Dans le présent document, sauf indication contraire, les termes suivants sont utilisés en accord avec les définitions suivantes:
TL = transmission lumineuse = pourcentage du flux lumineux incident transmis par un produit (entre 380 et 780 nm) selon l'illuminant C et un observateur de 2°.
TL_{V} = transmission lumineuse de la feuille de verre = pourcentage du flux lumineux incident transmis par le substrat de verre (entre 380 et 780 nm) selon l'illuminant C et un observateur de 2°. Elle est ici définie pour un verre de 4 mm d'épaisseur.
TL_{C} = transmission lumineuse du moyen pour réfléchir les infrarouges et en particulier de la couche = pourcentage du flux lumineux incident transmis par un produit constitué de la couche déposée sur une feuille de verre ayant une absorption nulle (entre 380 et 780 nm) selon l'illuminant C et un observateur de 2°.
RL = réflexion lumineuse = pourcentage du flux lumineux incident réfléchi par un produit (entre 380 et 780 nm) selon l'illuminant C et un observateur de 2.
FS = g = facteur solaire = pourcentage du rayonnement énergétique incident qui est d'une part directement transmis par le produit et d'autre part absorbé par celui-ci puis rayonné par sa face opposée à la source d'énergie calculé selon la norme ISO9050 : 2003.
S = select = sélectivité = le rapport de la transmission lumineuse au facteur solaire.
TIR = transmission infrarouge = pourcentage du rayonnement infrarouge transmis (entre 780 et 2500 nm) par un produit, calculé selon la norme ISO9050 : 2003.
TIR_{C} = transmission infrarouge du moyen pour réfléchir les infrarouges et en particulier la couche = pourcentage du rayonnement infrarouge transmis (entre 780 et 2500 nm) par un produit constitué de la couche déposée sur un substrat ayant une absorption nulle, et calculé selon la norme ISO9050 : 2003.
RIR : réflexion infrarouge = pourcentage du rayonnement infrarouge réfléchi (entre 780 et 2500 nm) par un produit, calculé selon la norme ISO9050 : 2003.
RIR_{V} = réflexion infrarouge de la feuille de verre avec un réflecteur idéal = pourcentage du rayonnement infrarouge réfléchi (entre 780 et 2500 nm) pour le substrat de verre portant une couche idéale réfléchissant à 100% dans l'infrarouge. Elle est définie ici pour une feuille de verre de 4 mm d'épaisseur. La couche étant déposée sur la face opposée au rayon incident, calculé selon la norme ISO9050 : 2003. La valeur de RIR_{V} maximale de 100% est atteinte lorsqu'il n'y a aucune absorption dans le verre, et RIR_{V} est d'autant plus faible que l'absorption dans le verre est grande, le long du trajet optique faisant 2*4 mm (aller-retour) = 8 mm.
RIR_{C} = réflexion infrarouge du moyen pour réfléchir les infrarouges et en particulier de la couche = pourcentage du rayonnement infrarouge réfléchi (entre 780 et 2500 nm) par un produit constitué de la couche déposée sur un substrat ayant une absorption nulle, calculé selon la norme ISO9050 : 2003.
AIR : absorption infrarouge = pourcentage du rayonnement infrarouge absorbé (entre 780 et 2500 nm) par un produit, calculé selon la norme ISO9050 : 2003.
AIR_{C} = réflexion infrarouge de la couche = pourcentage du rayonnement infrarouge absorbé (entre 780 et 2500 nm) pour le produit à couche déposé sur un substrat ayant une absorption nulle, calculé selon la norme ISO9050 : 2003.

Par simplification, la numérotation des feuilles de verre dans la suite de la description fait référence à la nomenclature de numérotation classiquement utilisée pour les vitrages. Ainsi, la face du verre feuilleté qui est au contact avec l'environnement extérieur au véhicule est connue comme étant la face 1 et la surface en contact avec le milieu interne, c'est-à-dire l'habitacle du véhicule, est appelée face 4, le film fonctionnel étant positionné entre les faces 2 et 3, où il peut être protégé contre les dommages.

Pour éviter tout doute, les termes "externe" et "interne" se réfèrent à l'orientation du vitrage lors de l'installation en tant que vitrage dans un véhicule ou un bâtiment.

Pour éviter le problème d'échauffement du vitrage et donc par voie de fait le film fonctionnel, on utilise classiquement une première feuille de verre externe clair voir extra-clair en combinaison avec un moyen pour réfléchir les infrarouges.

Par ailleurs, pour certaines applications, il est souhaitable d'utiliser des verres colorés teintés dans la masse afin de garantir un effet privatif mais surtout une réflexion lumineuse limitée en face extérieure et de diminuer la dépendance angulaire de la couleur en réflexion notamment dues à la présence d'un moyen pour réfléchir les infrarouges (qui a également un impact dans la réflexion dans le domaine visible).

Malheureusement, au jour d'aujourd'hui aucune solution n'est proposée pour résoudre ces deux problèmes simultanément.

Ainsi, l'invention propose un vitrage feuilleté comprenant :
a. une première feuille de verre externe,
b. un film fonctionnel alimenté électriquement,
c. un moyen pour réfléchir les rayonnements infrarouges disposé entre la première feuille de verre et le film fonctionnel,
d. au moins un premier intercalaire thermoplastique disposé entre le moyen pour réfléchir les rayonnements infrarouges et le film fonctionnel,
e. une seconde feuille de verre interne.

Selon l'invention, au moins la première feuille comprise dans le vitrage feuilleté présente une réflexion infrarouge RIR_{V} telle que RIR_{V} ≥ 1.087 * TL_{V}, TL_{V} étant la transmission lumineuse du verre, et en ce que le moyen pour réfléchir les infrarouges est caractérisée par une transmission lumineuse TL_{C} telle que TL_{C} ≥ 1.3 * TIR_{C}, TIR_{C} étant la transmission infrarouge du moyen pour réfléchir les rayonnements infrarouges.

Les inventeurs ont montré de manière surprenante que l'utilisation d'un vitrage selon l'invention, permet d'obtenir une absorption énergétique inférieure à celle d'un vitrage feuilleté de l'art antérieur présentant une TL similaire. Cette diminution de l'absorption énergétique permet de diminuer l'échauffement du vitrage lors de l'exposition au soleil et donc d'augmenter la longévité du film fonctionnel.

Le vitrage selon l'invention permet également d'utiliser une feuille de verre colorée ayant une esthétique recherchée (et permettant de garantir l'aspect privatif, la diminution de la réflexion lumineuse...), tout en garantissant, une absorption énergétique suffisamment faible pour éviter un échauffement néfaste du film fonctionnel. Ainsi, un des principaux avantages de la présente invention est que le moyen pour réfléchir les rayonnements infrarouges reflète une proportion élevée de l'énergie solaire avant d'atteindre le film fonctionnel où elle pourrait être absorbée. De plus, la feuille de verre comprenant le moyen pour réfléchir les infrarouges selon l'invention étant elle-même moins absorbante qu'une feuille de verre comprenant le moyen pour réfléchir les infrarouges non conforme à l'invention, la quantité de chaleur réémise vers le film fonctionnel s'en retrouvera diminuée. Grâce à l'invention, la quantité totale de la chaleur absorbée par le film fonctionnel sera plus faible et la longévité de celui-ci sera accrue.

Selon l'invention, lorsque le vitrage est monté sur un habitacle automobile ou sur un bâtiment, la première feuille de verre qui comprend un moyen pour réfléchir les infrarouges en face 2 est placée du côté extérieur du véhicule ou du bâtiment.

De plus, de manière surprenante, les inventeurs ont montré que l'utilisation d'au moins une feuille de verre combinée à un moyen pour réfléchir les infrarouges selon l'invention, dans un vitrage comprenant un film fonctionnel permet de diminuer le besoin de tremper la feuille de verre. En effet, quand un vitrage non conforme à l'invention est exposé à un rayonnement solaire, il va absorber l'énergie et de ce fait chauffer. De manière générale, le vitrage feuilleté comprenant un film fonctionnel est maintenu par un cadre que ce soit par l'habitacle du véhicule, lorsque le vitrage est monté sur un véhicule, ou sur un support, par exemple un montant, dans le domaine architectural. Ainsi, en raison de la présence de ce « cadre » ou de solutions de masquage des éléments de connexion du film fonctionnel, ou encore de la présence d'élément ombrageant partiellement le vitrage, celui-ci ne va pas chauffer de manière identique sur toute la surface du vitrage. Cela se traduira notamment par une dilatation irrégulière du vitrage. Cela est particulièrement vrai pour la partie du vitrage comprise à l'intérieur du cadre (et non exposée au rayonnement solaire). Par conséquent, les parties les plus chaudes seront en compression alors que les parties les plus froides seront elles en traction. Le verre est peu résistant à la traction, en particulier sur son bord où il y a habituellement une forte concentration de fissures et de défauts provoqués par la manipulation et le transport. Si la contrainte mécanique qui en résulte dépasse l'effort de traction acceptable le verre se brisera. Ce phénomène est appelé « casse thermique ». Pour éviter que le vitrage non conforme à l'invention ne se casse dans une telle situation, le verre est généralement thermiquement ou chimiquement trempé pour augmenter la résistance mécanique et rendre en pratique la casse thermique impossible, même dans des conditions climatiques sévères.

Grâce à l'invention, la quantité totale de la chaleur absorbée par le film fonctionnel sera plus faible. Donc, même en cas d'irradiation solaire fortement inégale, le gradient de température entre la partie chaude et la partie froide du vitrage sera suffisamment bas pour éviter le risque de casse thermique et la nécessité d'une trempe. Le fait de pouvoir s'affranchir de l'étape de trempe d'une feuille de verre est particulièrement intéressant puisqu'il est alors possible de travailler avec de grandes dimensions de feuilles de verre qui peuvent être découpées aux dimensions souhaitées à la dernière étape dans le processus d'assemblage conduisant ainsi à une plus grande flexibilité et d'importantes réductions des coûts de fabrication.

Des vitrages très sélectifs selon l'invention sont très avantageux car ils permettent de diminuer les besoins en éclairage artificiel et le refroidissement à l'intérieur du véhicule ou du bâtiment, tout en gardant une vue sur l'extérieur. Les vitrages feuilletés comprenant un film fonctionnel sont généralement utilisés pour améliorer le confort thermique intérieur et réduire le besoin de refroidissement. Ainsi, grâce à l'invention, la durée d'utilisation par exemple de la climatisation peut être réduite tout en réduisant les besoins en éclairage artificiel. Ainsi, le vitrage feuilleté selon l'invention présente des avantages aussi bien d'un point de vue énergétique (diminution du besoin de refroidissement) que d'un point de vue de sensation de bien-être (augmentation de la quantité de lumière naturelle disponible à l'intérieur du véhicule ou du bâtiment).

L'invention a aussi pour but la mise à disposition d'un moyen pour protéger un film fonctionnel contre la chaleur et un trop fort échauffement, lorsque celui-ci est intégré dans un vitrage feuilleté

De façon préférée, au moins la première feuille de verre présente une réflexion infrarouge RIR_{V} telle que RIR_{V} ≥ 1.087 * TL_{V} + 5.

De façon préférée, au moins la première feuille de verre présente une réflexion infrarouge RIR_{V} telle que RIR_{V} ≥ 0.510 * TL_{V} + 53.

Selon l'invention, au moins la première feuille de verre est faite de verre pouvant appartenir à diverses catégories. Le verre peut ainsi être un verre de type silico-sodo-calcique, alumino-silicate, boro-silicate,... De manière préférée, la composition de base du verre selon l'invention comprend, en une teneur exprimée en pourcentages en poids total de verre :

| | |
|---|---|
| SiO₂ | 55 - 85% |
| Al₂O₃ | 0 - 30% |
| B₂O₃ | 0 - 20% |
| Na₂O | 0 - 25% |
| CaO | 0 - 20% |
| MgO | 0 - 15% |
| K₂O | 0 - 20% |
| BaO | 0 - 20%. |

De manière toute préférée, la composition de base du verre comprend selon l'invention, en une teneur exprimée en pourcentages en poids total de verre :

| | |
|---|---|
| SiO₂ | 55 - 78% |
| Al₂O₃ | 0 - 18% |
| B₂O₃ | 0 - 18% |
| Na₂O | 0 - 20% |
| CaO | 0 - 15% |
| MgO | 0 - 10% |
| K₂O | 0 - 10% |
| BaO | 0 - 5% |

De manière la plus préférée et pour des raisons de coûts plus faibles de production, au moins la première feuille de verre selon l'invention est fait de verre silico-sodo-calcique. Avantageusement, selon ce mode de réalisation, la composition de base du verre comprend, en une teneur exprimée en pourcentages en poids total de verre:

| | |
|---|---|
| SiO₂ | 60 - 75% |
| Al₂O₃ | 0 - 6% |
| B₂O₃ | 0 - 4% |
| CaO | 0 - 15% |
| MgO | 0 - 10% |
| Na₂O | 5 - 20% |
| K₂O | 0 - 10% |
| BaO | 0 - 5%. |

En plus de sa composition de base, le verre peut comprendre d'autres composants, de nature et de quantité adaptées en fonction de l'effet recherché.

Une solution proposée dans l'invention pour obtenir un verre avec une réflexion dans les infrarouges RIRᵥ très élevée consiste à utiliser dans la composition du verre du chrome, dans une gamme de teneurs spécifiques.

Ainsi, selon un premier mode de réalisation, au moins la première feuille de verre externe a avantageusement une composition qui comprend, en une teneur exprimée en pourcentages en poids total de verre:

| | |
|---|---|
| Fer total (exprimé sous forme de Fe₂O₃) | 0,002 - 0,06% |
| Cr₂O₃ | 0,0001 - 0,06 %. |

De telles compositions de verre combinant un bas taux de fer et du chrome ont montré des performances particulièrement bonnes en terme de réflexion infrarouge RIRᵥ et montrent une haute transparence dans le visible et une teinte très peu marquée, proche d'un verre dit « extra-clair ». Ces compositions sont décrites dans les demandes internationales WO2014128016A1, WO2014180679A1, WO2015011040A1, WO2015011041A1, WO2015011042A1, WO2015011043A1 et WO2015011044A1, incorporées par référence dans la présente demande. Selon ce premier mode de réalisation particulier, la composition comprend préférentiellement une teneur en chrome (exprimée sous forme de Cr₂O₃) allant de 0,002 à 0,06 % en poids par rapport au poids total du verre. De telles teneurs en chrome permettent d'améliorer encore la réflexion infrarouge RIRᵥ.

Selon un deuxième mode de réalisation, au moins la première feuille de verre externe a une composition qui comprend, en une teneur exprimée en pourcentages en poids total de verre :

| | |
|---|---|
| Fer total (exprimé sous forme de Fe₂O₃) | 0,002 - 0,06% |
| Cr₂O₃ | 0,0015 - 1% |
| Co | 0,0001 - 1%. |

De telles compositions de verre à base de chrome et de cobalt ont montré des performances particulièrement bonnes en terme de réflexion infrarouge RIRᵥ, tout en offrant des possibilités intéressantes en terme d'esthétique/couleur (de la neutralité bleutée à une coloration intense voire jusqu'à l'opacité). De telles compositions sont décrites dans la demande de brevet européen n°13 198 454.4, incorporée par référence dans la présente demande.

Selon un troisième mode de réalisation, au moins la première feuille de verre externe a une composition qui comprend, en une teneur exprimée en pourcentages en poids total de verre :

| | |
|---|---|
| Fer total (exprimé sous forme de Fe₂O₃) | 0,02 - 1% |
| Cr₂O₃ | 0,002 - 0,5% |
| Co | 0,0001 - 0,5%. |

De préférence, selon ce mode de réalisation, la composition comprend : 0.06% < Fer total ≤ 1%.

De telles compositions à base de chrome et de cobalt permettent d'obtenir des feuilles de verre colorées dans la gamme bleu-vert, comparables en terme de couleur et de transmission lumineuse aux verres bleus et verts proposés sur le marché, mais avec des performances particulièrement bonnes en terme de réflexion infrarouge. De telles compositions sont décrites dans la demande de brevet européen EP15172780.7, et incorporée par référence dans la présente demande.

Selon un quatrième mode de réalisation, au moins première la feuille de verre externe a une composition qui comprend, en une teneur exprimée en pourcentages en poids total de verre :

| | |
|---|---|
| Fer total (exprimé sous forme de Fe₂O₃) | 0,002 - 1% |
| Cr₂O₃ | 0,001 - 0,5% |
| Co | 0,0001 - 0,5%. |
| Se | 0,0003 - 0,5%. |

De telles compositions de verre à base de chrome, de cobalt et de sélénium ont montrés des performances particulièrement bonnes en terme de réflexion infrarouge, tout en offrant des possibilités intéressantes en terme d'esthétique/couleur (de la neutralité grise à une coloration légère à intense dans la gamme gris-bronze). De telles compositions sont décrites dans la demande de brevet européen EP15172779.9 , et incorporée par référence dans la présente demande.

Alternativement au chrome, il est également proposé selon l'invention d'autres solutions utilisant un ou plusieurs composants dans des teneurs spécifiques, pour obtenir un verre avec une réflexion dans les infrarouges RIRᵥ très élevée.

Selon un premier mode de réalisation alternatif, au moins la première feuille de verre externe a une composition qui comprend, en une teneur exprimée en pourcentages en poids total de verre :

| | |
|---|---|
| Fer total (exprimé sous forme de Fe₂O₃) | 0,002 - 0,06% |
| CeO₂ | 0,001 - 1%. |

De telles compositions sont décrites dans la demande de brevet européen n°13 193 345.9, incorporée par référence dans la présente demande.

Selon un autre mode de réalisation alternatif, le verre a une composition qui comprend, en une teneur exprimée en pourcentages en poids total de verre :

| | |
|---|---|
| Fer total (exprimé sous forme de Fe₂O₃) | 0,002 - 0,06% ; |

et un des composants suivants :
- le manganèse (exprimé sous forme de MnO), en une teneur allant de 0,01 à 1% en poids ;
- l'antimoine (exprimé sous forme de Sb₂O₃), en une teneur allant de 0,01 à 1% en poids ;
- l'arsenic (exprimé sous forme de As₂O₃), en une teneur allant de 0,01 à 1% en poids,
ou
- le cuivre (exprimé sous forme de CuO), en une teneur allant de 0,0002 à 0,1% en poids.

De telles compositions sont décrites dans la demande de brevet européen n°14 167 942.3, incorporée par référence dans la présente demande.

Selon encore un autre mode de réalisation alternatif, la au moins première feuille de verre a une composition qui comprend, en une teneur exprimée en pourcentages en poids total de verre :

| | |
|---|---|
| Fer total (exprimé sous forme de Fe₂O₃) | 0,002 - 0,04% ; |

et au moins deux composants parmi le chrome, le sélénium, le cuivre, le cérium, le manganèse et l'antimoine; le chrome (exprimé sous forme de Cr₂O₃) étant en une teneur maximale de 0,02% en poids; le sélénium (exprimé sous forme de Se) étant en une teneur maximale de 0,08% en poids; le cuivre (exprimé sous forme de CuO) étant en une teneur maximale de 0,04% en poids; le cérium (exprimé sous forme de CeO₂) étant en une teneur maximale de 0,8% en poids; le manganèse (exprimé sous forme de MnO) étant en une teneur maximale de 1,6% en poids; l'antimoine (exprimé sous forme de Sb₂O₃) étant en une teneur maximale de 0,8% en poids ; ladite composition répondant à la formule :

**A** ≤ [ 10,02*(Cr₂O₃/Fe₂O₃) + 4*(Se/Fe₂O₃) + 2,73*(CuO/Fe₂O₃) + 0,7*(CeO₂/Fe₂O₃) + 0,23*(MnO/Fe₂O₃) + 0,11*(Sb₂O₃/Fe₂O₃) ] ;

**A** étant égal à 0,30.

De telles compositions sont décrites dans la demande de brevet européen n°14 177 487.7, incorporée par référence dans la présente demande.

Selon un mode de réalisation avantageux de l'invention, la composition de la feuille de verre présente un rédox inférieur à 15%. De préférence, le rédox est inférieur à 10%, ou encore inférieur à 5% voire même inférieur à 3%.

Le degré d'oxydation d'un verre est donné par son rédox, défini comme le rapport en poids d'atome de Fe²⁺ par rapport au poids total des atomes de fer présents dans le verre, Fe²⁺/Fe total.

La couche réfléchissant les infrarouges selon l'invention peut de préférence être caractérisée par une transmission lumineuse TL_{C} telle que TL_{C} ≥ 1.35 * TIR_{C}, TL_{C} ≥ 1.4 * TIR_{C}, ou TL_{C} ≥ 1.5 * TIR_{C}, de façon plus préférée telle que TL_{C} ≥ 1.75 * TIR_{C}, TL_{C} ≥ 1.9 * TIR_{C}, ou TL_{C} ≥ 1.95 * TIR_{C}, et plus préférentiellement encore TL_{C} ≥ 2 * TIR_{C}.

La couche peut avantageusement se caractériser par une réflexion infrarouge RIRC supérieure à 0.5 * (1-AIRC) ou supérieure à 0.6 * (1-AIRC), ou de façon plus préférée encore supérieure à 0.76 * (1-AIRC) ou supérieure à 0.86 * (1-AIRC) ou supérieure à 0.9 * (1-AIRC) ou supérieure à 0.95 * (1-AIRC) ou supérieure à 0.96 * (1-AIRC) ou supérieure à 0.97 * (1-AIRC) ou supérieure à 0.98 * (1-AIRC) ou supérieure à 0.99 * (1-AIRC).

Dans la gamme RIR_{C} > 0.5 * (1-AIR_{C}) et RIR_{C} ≤ 0.76 * (1-AIR_{C}), le facteur solaire n'est pas nécessairement diminué dans tous les cas de figure par rapport à la situation où un substrat en verre de l'art antérieur de même TL_{V} est utilisé. Mais cette gamme reste utile dans des situations où les différences de température et/ou d'écoulement d'air sont favorables à un transfert thermique vers l'intérieur du bâtiment ou du véhicule.

Dans la gamme RIR_{C} > 0.76 * (1-AIR_{C}), le facteur solaire est plus bas que lorsqu'un substrat en verre de l'art antérieur de même TL_{V} est utilisé, diminuant ainsi l'énergie transmise vers l'intérieur et augmentant la sélectivité du vitrage.

Dans ces deux gammes, les autres avantages selon l'invention sont présents, comme la limitation de l'échauffement du vitrage, les couleurs et esthétiques variées, la réflexion lumineuse extérieure atténuée, la correction de la couleur en réflexion extérieure, et/ou la dépendance angulaire de la couleur en réflexion extérieure moindre.

Alternativement, il peut être avantageux d'utiliser en combinaison avec le verre selon l'invention, une couche ayant une TIR_{C} inférieure à 50, 40, 35, 30, 25, 20, 15, 10, 5, 4, 3, 2 ou 1 %.

Avantageusement la couche réfléchissant les infrarouges utilisée pour ces applications est un empilage multicouche comprenant n couche(s) fonctionnelle(s) à base d'un matériau réfléchissant le rayonnement infrarouge, avec n ≥ 1, et n+1 revêtements diélectriques de telle sorte que chaque couche fonctionnelle est entourée par des revêtements diélectriques.

Les couches fonctionnelles, faisant partie des couches réfléchissant les infrarouges, sont avantageusement formées à partir de métal noble. Elles peuvent être à base d'argent, d'or, de palladium, de platine ou leur mélange ou alliage, mais aussi à base de cuivre ou d'aluminium, seul, en alliage ou en alliage avec un ou plusieurs des métaux nobles. De préférence, toutes les couches fonctionnelles sont à base d'argent. C'est un métal noble qui présente une très grande efficacité de réflexion du rayonnement infrarouge. Il est mis en oeuvre aisément dans un dispositif magnétron et son prix de revient n'est pas prohibitif, surtout eu égard à son efficacité. Avantageusement, l'argent est dopé avec quelques pourcents de palladium, d'aluminium ou de cuivre, à raison par exemple de 1 à 10% massique, ou on peut utiliser un alliage d'argent.

Les revêtements diélectriques, transparents, faisant partie des couches réfléchissant les infrarouges, sont bien connus dans le domaine des couches déposées par pulvérisation cathodique. Les matières adéquates sont nombreuses et il n'est pas utile d'en faire la liste complète ici. Ce sont en général des oxydes, oxy-nitrures ou nitrures métalliques. Parmi les plus courantes, on peut citer à titre d'exemple SiO₂, TiO₂, SnO₂, ZnO, ZnAlOx, Si₃N₄, AIN, Al₂O₃, ZrO₂, Nb₂O₅, YOₓ TiZrYOₓ, TiNbOₓ, HfOₓ, MgOₓ, TaOₓ, CrOₓ et Bi₂O₃, et leurs mélanges. On peut également citer les matériaux suivants: AZO, ZTO, GZO, NiCrOₓ, TXO, ZSO, TZO, TNO, TZSO, TZAO et TZAYO. L'expression AZO se rapporte à un oxyde de zinc dopé avec de l'aluminium ou à un oxyde mixte de zinc et d'aluminium, obtenu de préférence à partir d'une cible céramique formée par l'oxyde à déposer, pulvérisée soit en atmosphère neutre ou légèrement oxydante. De même, les expressions ZTO ou GZO se rapportent respectivement à des oxydes mixtes de titane et de zinc ou de zinc et de gallium, obtenus à partir de cibles céramiques, soit en atmosphère neutre ou légèrement oxydante. L'expression TXO se rapporte à de l'oxyde de titane obtenu à partir d'une cible céramique d'oxyde de titane. L'expression ZSO se rapporte à un oxyde mixte zinc-étain obtenu soit à partir d'une cible métallique de l'alliage déposé sous atmosphère oxydante ou à partir d'une cible céramique de l'oxyde correspondant, soit en atmosphère neutre ou légèrement oxydante. Les expressions TZO, TNO, TZSO, TZAO ou TZAYO se rapportent respectivement à des oxydes mixtes titane-zirconium, titane-niobium, titane-zirconium-étain, titane-zirconium-aluminium ou titane-zirconium-aluminium-yttrium, obtenus à partir de cibles céramiques, soit en atmosphère neutre ou légèrement oxydante. Tous ces matériaux cités ci-avant peuvent être utilisés pour former les revêtements diélectriques utilisés dans la présente invention.

De préférence, le revêtement diélectrique disposé sous une ou sous chaque couche fonctionnelle comprend, en contact direct avec la ou les couches fonctionnelles, une couche à base d'un oxyde de zinc, éventuellement dopé par exemple à l'aluminium ou au gallium, ou en alliage avec de l'oxyde d'étain. L'oxyde de zinc peut avoir un effet particulièrement favorable sur la stabilité et la résistance à la corrosion de la couche fonctionnelle, notamment lorsqu'il s'agit d'argent. Il est également favorable à l'amélioration de la conductibilité électrique d'une couche à base d'argent, et donc à l'obtention d'une faible émissivité.

Les différentes couches de l'empilage sont, par exemple, déposées par pulvérisation cathodique sous pression réduite assistée par champ magnétique, dans un dispositif bien connu de type magnétron. La présente invention n'est toutefois pas limitée à ce procédé particulier de dépôt de couche.

Selon un mode de réalisation particulier de l'invention, ces ensembles de couches peuvent être disposés soit sur une feuille support, notamment de PET, insérée dans le feuilleté, soit par application directe sur la feuille de verre. Dans les deux cas, ce moyen pour réfléchir les infrarouges est situé dans le feuilleté en amont du film fonctionnel par rapport au soleil, améliorant ainsi la protection de ce film.

Selon un mode de réalisation préféré de l'invention, le vitrage feuilleté selon l'invention comprend de préférence un film fonctionnel pris en sandwich entre une première et une seconde feuille de verres, la couche réfléchissant les rayonnements infrarouges étant alors placée en face 2 c'est-dire sur la face interne de la première feuille de verre qui est montée sur le véhicule ou le bâtiment et étant en contact avec l'environnement extérieur. Dans ce cas, au moins la première feuille de verre qui est placée du côté extérieur présente les propriétés citées ci-dessus. Cependant, la seconde feuille de verre peut également présenter les propriétés décrites ci-dessus. Les feuilles de verres peuvent être de compositions identiques ou différentes.

Selon un autre mode de réalisation de l'invention, le vitrage feuilleté peut être un triple vitrage. Dans ce cas, le film fonctionnel est pris en sandwich entre une première feuille et une seconde feuille de verre et une troisième feuille est placée du côté de la deuxième feuille de verre. Dans ce cas, au moins la première feuille de verre qui est placé du coté extérieur présente les propriétés citées ci-dessus. Cependant, la seconde voire la troisième feuille de verre peuvent également présenter les propriétés décrites ci-dessus. Les feuilles de verres peuvent être de compositions identiques ou différentes.

Selon l'invention, un assemblage comprenant une seule feuille de verre peut également être envisagé. Dans ce cas-là, la feuille de verre a les propriétés décrites ci-dessus.

Le vitrage feuilleté est ainsi positionné de telle sorte que, lorsqu'il est monté sur un bâtiment, le rayonnement solaire frappe d'abord la feuille de verre revêtue du côté dépourvu de couche, puis la couche réfléchissant les infrarouges, puis la seconde feuille de verre, et puis éventuellement la troisième s'il s'agit d'un triple vitrage. La couche réfléchissant les infrarouges se trouve donc, selon la convention généralement utilisée, en position 2. C'est dans cette position que la protection solaire est la plus efficace.

Selon un mode de réalisation préférée de l'invention, le film fonctionnel est altérable à une température élevée. Par exemple, un tel film comprend des cristaux liquides dispersés dans un polymère (PDLC) ou encore des particules dispersées en suspension dans un polymère (SPD) ou encore une couche électrochrome....

On entend par température élevée des températures supérieures à 60°C et de manière préférée des températures supérieures à 80°C. Le film fonctionnel soumis de manière prolongée à de telles températures, s'altère. Il est donc nécessaire de réduire fortement, voire d'éliminer l'absorption des infrarouges par la feuille de verre qui sera placée du côté extérieur du véhicule et de maximiser la réflexion des infrarouges par la feuille de verre comprenant le moyen pour réfléchir les infrarouges selon 'invention. En effet, cela diminuera le transfert direct des infrarouges au film fonctionnel ainsi que la réémission de chaleur par le verre comprenant le moyen pour réfléchir les infrarouges vers le film fonctionnel. Selon l'invention, le au moins un intercalaire thermoplastique peut être de n'importe quel matériau connu dans la technique apte à former un stratifié. Il peut s'agir d'un copolymère éthylène-acétate de vinyle, polyuréthane, polycarbonate, polyvinyle butyral, le chlorure de polyvinyle ou un copolymère d'éthylène et d'acide méthacrylique. Selon un mode de réalisation préféré de l'invention, l'intercalaire thermoplastique comprenant une zone opaque aux rayonnements des longueurs du visible est une feuille de polyvinyle de butyral (PVB) ou d'éthylène-acétate de vinyl (EVA). Il est généralement disponible dans une épaisseur comprise entre 0,38 et 1,1 mm, mais le plus souvent de 0,76 mm.

Selon un mode de réalisation particulier de l'invention, l'intercalaire thermoplastique est un intercalaire coloré.

L'insertion du film fonctionnel dans le vitrage feuilleté est de préférence facilitée par la mise en place d'un logement aménagé dans au moins un intercalaire. Ainsi, avantageusement, le vitrage feuilleté comprend en outre un second intercalaire thermoplastique encadrant le film fonctionnel. De manière préférée, le second intercalaire thermoplastique est de préférence une feuille de polyvinyle de butyral (PVB). Le film fonctionnel est alors de taille inférieure à celle des feuilles de verre entre lesquelles le film sera laminé. Le film fonctionnel est alors placé dans une région prédécoupée du second intercalaire thermoplastique de manière à favoriser sa lamination entre les deux feuilles de verre et éviter la formation de bulles dans le vitrage feuilleté.

Selon une mise en oeuvre particulière de l'invention, les première et seconde feuilles de verre sont laminées grâce à au moins trois intercalaires thermoplastiques.

De manière avantageuse, des intercalaires thermoplastiques supplémentaires peuvent être disposés entre le film fonctionnel et les feuilles de verre.

Une telle conception utilisant au moins trois intercalaires thermoplastiques dont un encadrant le film fonctionnel, peut être particulièrement avantageuse pour stratifier un film fonctionnel alimenté électriquement, dont l'épaisseur est supérieure à une cinquantaine de microns.

Selon un mode de réalisation préféré de l'invention, le film fonctionnel est placé à une certaine distance du bord du vitrage feuillé et en particulier de la zone dite « Edge delition ». Cette distance minimale, qui est fonction de la longueur de la zone « Edge delition » permet de dissiper les calories et donc de protéger le film fonctionnel.

Comme alternative aux couches métalliques sur la base décrite ci-dessus, la couche réfléchissant les infrarouges peut comprendre une pluralité de couches non métalliques, de telle sorte qu'il fonctionne comme un filtre passe-bande (la bande étant centré sur la région du proche infrarouge du spectre électromagnétique).

Ainsi, lors de l'utilisation en tant que vitrage pour automobile (ceci est également valable pour un vitrage destiné à être montré dans un bâtiment), le vitrage feuilleté selon l'invention peut être décrit comme comprenant au moins une feuille de verre externe présentant une réflexion infrarouge RIR_{V} telle que RIR_{V} ≥ 1.087 * TL_{V}, TL_{V} étant la transmission lumineuse de la feuille de verre et une feuille de verre interne, un moyen pour réfléchir les infrarouges prévu entre la feuille de verre externe du vitrage feuilleté et le film fonctionnel caractérisé par une transmission lumineuse TL_{C} telle que TL_{C} ≥ 1.3 * TIR_{C}, TIR_{C} étant la transmission infrarouge du moyen pour réfléchir les rayonnements infrarouges. L'utilisation de ce vitrage permet de réduire la quantité de rayonnement infrarouge qui pourrait être autrement incident sur le film fonctionnel et donc le détériorer.

Par ailleurs, les composants des films fonctionnels peuvent être dégradés par une exposition excessive aux UV. Le choix des intercalaires permet de limiter de façon considérable cette exposition. C'est le cas en particulier de l'utilisation d'intercalaires de PVB, qui par nature font écran aux UV ne laissant passer qu'une très faible proportion de ceux-ci. Pour les films PVB de 0,38mm d'épaisseur plus de 95% des UV sont supprimés. Cette proportion peut dépasser 99%. Des polymères à base d'éthylène vinyl-acétate (EVA) sont aussi proposés qui renferment des composants leur conférant une très faible transmission des UV.

De manière avantageuse, le au moins un intercalaire thermoplastique et en particulier la zone non opaque est un intercalaire thermoplastique qui fait écran aux UV encore appelé « UV-cut ».

Dans le domaine automobile, la présence d'un toit vitré modifie les conditions de confort thermique pour les occupants du véhicule. Si l'échauffement lorsque le véhicule est exposé au soleil conduit aux conditions indiquées ci-dessus, pour les passagers la présence de toits vitrés peut aussi conduire à ce qui est qualifié de sensation «d'épaule froide» lorsque la température extérieure est inférieure aux températures ambiantes de confort. Cette sensation est causée par une déperdition de chaleur depuis l'habitacle, par l'émission d'infrarouges lointains.

Afin de minimiser la déperdition de chaleur et le transfert par radiation de l'énergie absorbée dans l'assemblage vers l'habitacle, des couches low-e (couche basse-émissive) peuvent être prévues sur la face 4 du vitrage. Les couches en question font office de filtre réfléchissant sélectivement les rayons infrarouges lointains émis depuis l'habitacle, sans constituer un obstacle important à la transmission des rayons du domaine visible de l'extérieur vers l'intérieur.

La présence de couches minces en position 4 est choisie en dépit du fait que dans cette position les couches ne sont pas protégées contre des altérations notamment mécaniques. Il est possible de choisir des couches low-e qui offrent une résistance mécanique et chimique suffisante.

Avantageusement, compte tenu de l'importance de disposer de revêtements de bonne résistance mécanique, on choisit des couches dites «dures», telles que celles produites par des techniques de type pyrolytique, CVD ou PECVD. Mais des systèmes low-e peuvent aussi être préparés par les techniques de pulvérisation cathodique sous vide, à condition que ces systèmes soient protégés par des couches suffisamment résistantes.

Selon l'invention il est préféré d'utiliser un système de couches basse-émissives, dont l'émissivité est inférieure à 0,3 et de préférence inférieure à 0,2, et de façon particulièrement préférée inférieure à 0,1.

Les systèmes "low-e" (bas-émissifs) pyrolytiques les plus usuels comportent une couche d'oxyde d'étain dopé déposée sur une première couche ayant pour rôle de neutraliser la couleur en réflexion. La couche au contact du verre est ordinairement une couche de silice ou d'oxy-carbure de silicium, éventuellement modifiée par des additifs. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques.

Le film fonctionnel selon l'invention est alimenté électriquement. Son raccordement au système général d'alimentation électrique du véhicule se fait nécessairement à partir des bords du vitrage. Les conduites électriques de connexion ne sont normalement pas transparentes. Pour ne pas rompre la transparence même limitée du vitrage, on s'efforce de dissimuler ces conduites dans les zones périphériques du vitrage, lesquelles comportent selon une mise en oeuvre de l'invention, une zone opaque formée par de l'émail, destinée notamment à masquer les marques irrégulières de collage du vitrage sur la carrosserie.

La commande du film fonctionnel peut comprendre de simples interrupteurs ou encore des capteurs placés entre le film fonctionnel et la seconde feuille de verre ou sur la face 4 du vitrage feuilleté. Si l'on souhaite disposer un interrupteur sur le toit vitré lui-même, il est souhaitable qu'il ne fasse pas obstacle à la transparence à l'origine du choix des toits vitrés.

Selon un mode de réalisation préféré de l'invention, le film fonctionnel permet de faire varier la transmission lumineuse du vitrage intégrant le film.

Le choix des films LC (ou PDLC), SPD, electrochromes... dans des toits feuilletés permet de satisfaire au besoin du caractère privatif et à l'absence d'éblouissement.

Lorsque le film LC est soumis au champ électrique dans le mode actif, le taux de diffusion, de façon connue, est modulable en fonction du champ électrique appliqué. L'orientation des cristaux est directement dépendante de ce champ. L'accroissement du champ reste limité à ce que les films peuvent supporter sans risque de claquage, correspondant à un court-circuit entre les électrodes qui recouvrent le matériau fonctionnel constitué essentiellement de polymère contenant les cristaux liquides. La tension supportable peut dépendre en partie de l'épaisseur du film. Pour les raisons indiquées précédemment cette épaisseur est limitée. Dans ces conditions la tension supportable pour les films usuels est de l'ordre de 220v.

Pour la constitution des toits il est préférable de limiter la lumière pénétrant dans l'habitacle. Celle-ci peut être relativement faible sans contrarier les souhaits des utilisateurs. Le choix de cette limitation du flux lumineux, transmis ou diffusé, tient aussi au fait qu'il conduit à la limitation de la pénétration de la chaleur. Si les rayons infrarouges sont un vecteur important de l'énergie pénétrant dans l'habitacle, une autre part très importante accompagne le rayonnement du domaine visible. Il est donc nécessaire pour maîtriser le flux énergétique de réduire sensiblement la part du rayonnement visible franchissant le vitrage.

Avantageusement les vitrages selon l'invention sont composés de telle sorte que la lumière pénétrant par transmission et diffusion à l'état activé du film LC ne soit pas supérieure à 50% de la lumière incidente et de préférence inférieure à 40% voire même 30%. Cette proportion peut être beaucoup plus réduite. Néanmoins les vitrages selon l'invention présentent avantageusement un taux global de transmission et diffusion à l'état activé du film LC, qui n'est pas inférieur à 5% et de préférence pas inférieur à 10%.

L'utilisation d'une feuille de verre selon l'invention, en particulier à faible TLv, est particulièrement avantageuse afin de limiter la transmission lumineuse tout en garantissant un faible échauffement du film fonctionnel et une esthétique extérieure plaisante (faible réflexion lumineuse).

Ainsi, des intercalaires thermoplastiques colorés peuvent être superposé de manière à obtenir une couleur particulière ou des conditions optiques particulières.

Un SPD peut également être choisi de manière à satisfaire le besoin du caractère privatif et à l'absence d'éblouissement. Un SPD est un film comprenant une pluralité de particules en suspension dans un milieu liquide de suspension, qui sont détenus dans un milieu polymère.

Le film est commutable entre un état sombre (en l'absence de tension est appliquée), et un état très transparent (lorsqu'une tension est appliquée).

Le degré d'alignement relatif entre les particules est déterminée par la tension alternative appliquée, de telle sorte qu'un dispositif à base de SPDs présente une transmission optique variable lorsqu'une tension variable est appliquée.

Le film SPD dans une structure de vitrage feuilleté, peut représenter la totalité ou une partie d'une couche intermédiaire entre les deux feuilles de verre.

Selon un autre mode de réalisation particulier de l'invention, le film fonctionnel selon l'invention est un film électrochrome, photochrome ou encore thermochrome.

Selon un mode de réalisation particulier de l'invention, le film fonctionnel selon l'invention peut comprendre des diodes électroluminescentes. Il existe de nombreuses diodes électroluminescentes connues dans l'état de l'art qui peuvent être utilisées conformément à la présente invention.

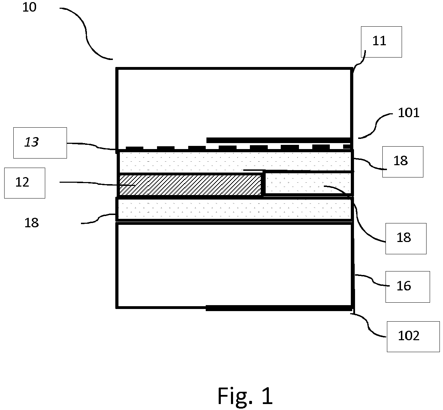

Pour une meilleure compréhension, la présente invention va maintenant être décrite plus en détail à titre d'exemple non limitatif, en référence à la ***figure 1*** qui montre une vue en plan schématique d'un vitrage 10 connu de l'art antérieur comprenant un film SPD stratifié entre 2 feuilles de verre.

La ***figure 1*** montre un vitrage feuilleté selon l'invention, sous la forme d'un toit vitré pour automobile 10, comprenant un film fonctionnel sous la forme d'un film de particules dispersées suspendues 12 monté à l'intérieur de la structure feuilletée. La ***figure 1*** ne montre pas les courbures des feuilles par souci de clarté. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush» correspondant à une bonne continuité de surface entre les éléments contigus.

Le film fonctionnel est un film de type SPD de particules dispersées suspendues sensibles à l'application de la tension électrique. Cette structure feuilleté comporte en outre un capteur sensible à l'application de la tension électrique de manière à activer le film SPD (non montré), un tel capteur pouvant être placé entre le SPD et la seconde feuille de verre

Le film de particules dispersées suspendues (SPD) 12 est représenté comme étant positionné à proximité des bords des feuilles de verre 11 et 16 du vitrage 10, mais il pourrait être positionnée n'importe où à l'intérieur du vitrage, par exemple au centre. Cependant, afin de protéger le film SPD à l'intérieur du vitrage feuilleté, il est préférable que les bords du film n'atteignent pas les bords des feuilles de verre 11 et 16.

Le film SPD est « encadré » par un cadre de PVB 17 (correspondant au second intercalaire thermoplastique décrit ci-dessus) et est laminé entre deux intercalaires thermoplastiques 17 et 18 (correspondant respectivement au premier et troisième intercalaires thermoplastiques), cet ensemble est lui-même laminé entre une feuille de verre externe 11 et une feuille de verre externe 16. L'intercalaire thermoplastique 18 est ajouté de manière à assurer une adhérence suffisante entre le film SPD 12 et la feuille de verre extérieure 16. Il est connu d'utiliser une conception "cadre" encadrant le film fonctionnel, lui-même laminé entre deux intercalaires thermoplastiques, pour stratifier un film fonctionnel au sein d'un vitrage. Selon un mode de réalisation particulier de l'invention et tel qu'illustré par la ***figure 1****,* les intercalaires thermoplastiques 17 et 18 sont en PVB mais bien entendu ils peuvent être dans un tout autre matériau apte à permettre la lamination du film fonctionnel entre deux feuilles de verre. Les intercalaires thermoplastiques 17 et 18 sont co-extensifs avec les feuilles de verre 11 et 16. Le film SPD présente une épaisseur de 0,38mm.

Autour de la périphérie du toit vitré pour automobile 10, est disposée en faces 2 et 4 une bande d'occultation 101 et 102 plus précisément une couche d'émail qui a pour rôle d'une part de masquer et protéger le matériau d'étanchéité (non représenté) qui est utilisé pour fixer la vitre dans un véhicule (non représenté), et d'autre part de masquer les connexions électriques (busbars, etc) qui fournissent de l'énergie électrique au film de polymère de cristaux liquides dispersés 12. La couche réfléchissant les infrarouges 13 de type couche métallique d'argent, permet de réfléchir les rayonnements infrarouges 104 provenant de l'extérieur (soleil) et se dirigeant en direction du film SPD. Selon un mode de réalisation particulier de l'invention.

Les feuilles de verres 11 et 16 telles qu'illustrées dans la ***figures 1*** sont des verres de type silico sodocalcique etrespectivement de 1,6mm et 2,6mm d'épaisseur.

A titre d'exemples, des modes de réalisation particuliers de l'invention vont à présent être décrits, en faisant référence aux exemples 1 à 18 selon l'invention et aux exemples comparatifs C1-C24 hors invention.

Les principales caractéristiques des verres utilisés dans les exemples et exemples comparatifs sont données dans la Table I. La Table II quant à elle décrit des couches réfléchissant les infrarouges selon l'invention, répondant à la relation TL_{C} ≥ 1.3 * TIR_{C}, tandis que la Table III donne un exemple (dit comparatif) d'une couche réfléchissant les infrarouges, sélective, mais ne répondant pas à la relation TL_{C} ≥ 1.3 * TIR_{C}.

### Dans les Tables II et III,

- ZSO5 représente un oxyde mixte zinc-étain, dans lequel la proportion zinc-étain est proche de 50-50% en poids (Zn₂SnO₄),
- SiN représente un nitrure de silicium,
- TZO représente un oxyde mixte titane-zirconium, dans lequel la proportion d'oxyde de titane et d'oxyde de zirconium est proche de 65-35% en poids.

**TABLE I**

| **Type de verre** | **RIR_{V(ISO9050)}** | **TL_{V(C,2)}** | **a* (D,10)** | **b* (D,10)** |
|---|---|---|---|---|
| comp-clair | 76.8 | 89.7 | -0.9 | 0.2 |
| comp-extraclair | 95.4 | 91.5 | -0.1 | 0.1 |
| inv-clair | 99.2 | 89.9 | -0.9 | 0.6 |
| | | | | |
| comp-vert | 17.7 | 78.5 | -6.1 | 1.2 |
| inv-vert | 97.1 | 75.5 | -5.4 | 0.4 |
| comp-vert foncé | 11 | 72.7 | -8.3 | 2 |
| inv-vert foncé | 96.8 | 71.1 | -7.3 | 1.4 |
| comp-vert 'privacy' | 5 | 34.3 | -16.6 | 0.4 |
| inv-vert 'privacy' | 91 | 41 | -16.1 | -1.1 |
| | | | | |
| inv-bleu | 96 | 77.2 | -3 | -2.9 |
| comp-bleu foncé | 18.4 | 66.7 | -6.6 | -8.1 |
| inv-bleu foncé | 95.1 | 64.2 | -5.4 | -8.3 |
| comp-bleu | 6.7 | 46.5 | -12.7 | -11.8 |
| 'privacy' | | | | |
| inv-bleu 'privacy' | 90.4 | 42 | -10.6 | -12.2 |
| | | | | |
| comp-gris clair | 35.7 | 70.1 | -1.1 | 0 |
| inv-gris clair | 97.1 | 70.1 | 0 | 0 |
| comp-gris | 42.7 | 55.7 | 0.9 | -2.1 |
| inv-gris | 95.2 | 55.9 | -1.4 | -1.9 |
| comp-gris 'privacy' | 7.7 | 17.4 | -1 | -0.1 |
| inv-gris 'privacy' | 87.3 | 17.3 | 1.2 | -0.9 |
| | | | | |
| comp-bronze | 45.9 | 61 | 2.8 | 4.4 |
| inv- bronze | 96.6 | 58 | 2.6 | 4.3 |

**TABLE II**

| | | | | | | | | | | | | | | | | | | | | |
|---|---|---|---|---|---|---|---|---|---|---|---|---|---|---|---|---|---|---|---|---|
| A | | RIRc > 0.86* (1-AIRc) | | | | | ZSO5 | ZnO | Ag | Ti | ZSO5 | ZnO | Ag | Ti | ZSO5 | ZnO | Ag | Ti | ZSO5 | Ti |
| | | | | | | | 385 Å | | 142 Å | 55 Å | 745 Å | | 146 Å | 60 Å | 710 Å | | 133 Å | 50 Å | 290 Å | 50 Å |
| B | | TL_{C} | TIR_{C} | RIR_{C} | AIR_{C} | | ZSO5 | ZnO | Ag | Ti | ZSO5 | ZnO | Ag | Ti | ZSO5 | Ti | | | | |
| | | 79.6 | 17.2 | 74.2 | 8.6 | | 290 Å | | 120 Å | 60 Å | 950 Å | | 94 Å | 53 Å | 180 Å | 50 Å | | | | |
| C | | TL_{C} | TIR_{C} | RIR_{C} | AIR_{C} | | SiN | NiCr | Ag | NiCr | SiN | | | | | | | | | |
| | | 25.7 | 9.9 | 61.1 | 29 | | 588 Å | 36 Å | 165 Å | 67 Å | 500Å | | | | | | | | | |
| D | | TL_{C} | TIR_{C} | RIR_{C} | AIR_{C} | | TiO2 | ZnO | Ag | TiO2 | ZnO | TZO | | | | | | | | |
| | | 88.8 | 37.2 | 57 | 5.8 | | 180 Å | | 118 Å | 30 Å | 445 Å | | | | | | | | | |

**TABLE III**

| | | | | | | | | |
|---|---|---|---|---|---|---|---|---|
| Z | | TL_{C} | TIR_{C} | RIR_{C} | AIR_{C} | | SnO2 | TZO |
| | | 68.7 | 82.5 | 17.5 | 0 | | 150 Å | 420 Å |

Dans les tableaux qui suivent, sauf indication contraire, les mesures sont données pour des vitrages feuilletés comprenant depuis l'extérieur un premier verre-substrat revêtu (couche en position 2) de 6 mm d'épaisseur (sauf pour les exemples comparatifs C1, C2, C3, où l'épaisseur est de 8 mm), un film de PVB de 0.76 mm d'épaisseur, et un second verre dit "mid-iron" de 4 mm d'épaisseur. Les propriétés de transmission lumineuse (TL), réflexion lumineuse (RL), facteur solaire (FS), sélectivité (select=TL/FS), absorption (Abs), sauf indication contraire, sont données selon la norme ISO9050:2003, sous illuminant D, 2°. Les couleurs L*, a*, b* sont données selon le modèle CIE Lab défini en 1976 par la Commission internationale de l'éclairage (CIE), sous illuminant D, 10°, en transmission (T) et en réflexion (R). L'absorption (Abs) est l'absorption énergétique du vitrage feuilleté complet.

**Tableau A**

| ex. | Substrat | Couche | TL D2° | L* D10 T | a* D10 T | b* D10 T | RL D2⁰ | L* D10 R | a* D10 R | b* D10 R | Abs | FS | Select TL/FS |
|---|---|---|---|---|---|---|---|---|---|---|---|---|---|
| 1 | inv-gris clair | A | 48.2 | 74.9 | -0.5 | 2.9 | 7.4 | 32.6 | -2.1 | -0.3 | 70.2 | 30.4 | 1.6 |
| C1 | comp-gris clair | A | 49 | 75.3 | -4.4 | 4.3 | 7.5 | 32.9 | -4.3 | 0.6 | 72.8 | 38.3 | 1.3 |
| 2 | inv-gris clair | B | 52.9 | 77.6 | 0.2 | 2.4 | 7.3 | 32.5 | -3.2 | -1.5 | 58.8 | 41.6 | 1.3 |
| C2 | comp-gris clair | B | 53.7 | 78.1 | -3.9 | 3.9 | 7.4 | 32.8 | -5.1 | -0.7 | 68.6 | 41.7 | 1.3 |
| 3 | inv-gris clair | C | 16.6 | 47.6 | -2.1 | 3.9 | 19.1 | 50.8 | 0.9 | -5.4 | 68.8 | 24.8 | 0.7 |
| C3 | comp-gris clair | C | 16.8 | 47.9 | -5 | 4.9 | 19.6 | 51.4 | -3.8 | -3.5 | 72.7 | 28.2 | 0.6 |
| 4 | inv-vert | A | 53.8 | 78.2 | -7.4 | 3.4 | 8.3 | 34.5 | -5.5 | 0.3 | 68 | 31.5 | 1.7 |
| C4 | comp-vert | A | 57.1 | 80.2 | -8.1 | 4.3 | 8.7 | 35.3 | -7.3 | 1.5 | 68.4 | 40.4 | 1.4 |
| 5 | inv-vert | B | 59 | 81.2 | -6.8 | 2.9 | 8.1 | 34.3 | -6.8 | -1.1 | 56.8 | 42.5 | 1.4 |
| C5 | comp-vert | B | 62.5 | 83.2 | -7.7 | 3.9 | 8.6 | 35.3 | -8.2 | -0.8 | 63.4 | 44.5 | 1.4 |
| 6 | inv-vert | C | 18.5 | 50 | -7.1 | 4.4 | 22.9 | 55.1 | -7.1 | -5.1 | 64.7 | 25,0 | 0.7 |
| C6 | comp-vert | C | 19.7 | 51.4 | -7.8 | 5 | 25.2 | 57.5 | -9.2 | -3.8 | 65.8 | 28.5 | 0.7 |
| 7 | inv-vert | D | 60.3 | 82 | -9.3 | 0.2 | 9.2 | 36.2 | -0.9 | 4.9 | 45.6 | 51.5 | 1.2 |
| C7 | comp-vert | D | 63.9 | 84 | -10.5 | 1.2 | 9.8 | 37.3 | -1.2 | 5.6 | 59.2 | 46.6 | 1.4 |
| 8 | inv-vert'privacy' | A | 22.5 | 54.3 | -18.5 | 1.6 | 5.1 | 27 | -2.2 | -0.7 | 84.9 | 23.1 | 1,0 |
| C8 | comp-vert'privacy' | A | 17.2 | 48.6 | -18.6 | 2.5 | 4.7 | 25.9 | -2.1 | 0 | 89 | 29.3 | 0.6 |
| 9 | inv-vert'privacy' | B | 24.6 | 56.5 | -18.4 | 1 | 5 | 26.8 | -2.9 | -0.4 | 76.4 | 31.4 | 0.8 |
| C9 | comp-vert'privacy' | B | 18.8 | 50.6 | -18.8 | 2.2 | 4.7 | 25.9 | -2.2 | -0.4 | 88.1 | 30,0 | 0.6 |
| 10 | inv-vert 'privacy' | C | 7.7 | 33.3 | -14.3 | 2.7 | 7.8 | 33.6 | -7.4 | -2.7 | 85 | 23.8 | 0.3 |
| C10 | comp-vert 'privacy' | C | 5.9 | 29.2 | -14.4 | 3 | 6.3 | 30.3 | -6.9 | -1 | 91.5 | 26.2 | 0.2 |
| 11 | inv-bleu foncé | A | 42.5 | 71.4 | -7.1 | -7.7 | 6.8 | 31.5 | -2.7 | -4.8 | 72.9 | 29.3 | 1.5 |
| C11 | comp-bleu foncé | A | 44.9 | 73.2 | -8.6 | -7.5 | 7.1 | 32.1 | -4.4 | -4.3 | 73.5 | 37.8 | 1.2 |
| 12 | inv-bleu foncé | B | 46.6 | 74.2 | -6.6 | -8.5 | 6.8 | 31.5 | -4.3 | -5.6 | 62 | 39.9 | 1.2 |
| C12 | comp-bleu foncé | B | 49.2 | 75.9 | -8.2 | -8.3 | 7 | 32.2 | -5.6 | -5.9 | 68.7 | 41.8 | 1.2 |
| 13 | inv-bleu foncé | C | 14.6 | 45.2 | -6.9 | -3.4 | 16.1 | 47.6 | -3.5 | -17.3 | 72.7 | 24.7 | 0.6 |
| C13 | comp-bleu foncé | C | 15.4 | 46.4 | -8.1 | -3.4 | 17.5 | 49.6 | -6.1 | -17.4 | 74.7 | 28.2 | 0.5 |
| 14 | inv-bleu foncé | D | 47.7 | 75 | -8.6 | -11.2 | 7.3 | 32.6 | -1.1 | -1.1 | 51.6 | 48.9 | 1,0 |
| C14 | comp-bleu foncé | D | 50.5 | 76.8 | -10.4 | -11.1 | 7.7 | 33.3 | -1.9 | -1.1 | 65 | 44,0 | 1.1 |
| 15 | inv-gris'privacy' | A | 6.3 | 29.8 | 0.4 | 1 | 4.3 | 24.7 | 0.1 | -0.6 | 91.1 | 19.6 | 0.3 |
| C15 | comp-gris'privacy' | A | 6.3 | 30 | -1.5 | 1.5 | 4.3 | 24.7 | -0.1 | -0.5 | 92.8 | 26.8 | 0.2 |
| 16 | inv-gris'privacy' | B | 6.9 | 31.2 | 1 | 0.6 | 4.3 | 24.7 | 0 | -0.5 | 83.1 | 27.4 | 0.3 |
| C16 | comp-gris'privacy' | B | 6.9 | 31.4 | -1.1 | 1.3 | 4.3 | 24.7 | -0.1 | -0.5 | 91.5 | 27.7 | 0.2 |
| 17 | inv-gris'privacy' | C | 2.2 | 16 | -0.5 | 1.8 | 4.5 | 25.4 | 0.3 | -0.9 | 90.2 | 23,0 | 0.1 |
| C17 | comp-gris'privacy' | C | 2.2 | 16.2 | -1.9 | 2.1 | 4.5 | 25.3 | -0.1 | -0.7 | 94.1 | 25.6 | 0.1 |
| 18 | inv-gris'privacy' | D | 7 | 31.6 | 0.3 | -0.9 | 4.3 | 24.8 | 0.1 | -0.4 | 74.6 | 35.2 | 0.2 |
| C18 | comp-gris'privacy' | D | 7.1 | 31.8 | 2.1 | -0.2 | 4.3 | 24.8 | 0 | -0.4 | 90.7 | 28.3 | 0.3 |

**Tableau B**

| ex. | Substrat | Couche | TL D2⁰ | L* D10 T | a* D10 T | b* D10 T | LR D2⁰ | L* D10R | a* D10 R | b* D10 R | Abs | FS | Select TL/FS |
|---|---|---|---|---|---|---|---|---|---|---|---|---|---|
| C19 | inv-vert | Z | 58.9 | 81.1 | -7 | 3.6 | 14.2 | 44.7 | -6.9 | -2.9 | 20.9 | 70.5 | 0.8 |
| C20 | coup-vert | Z | 62.5 | 83.1 | -7.9 | 4.6 | 15.4 | 46.4 | -8.5 | -2 | 48.8 | 50,0 | 1.3 |
| C21 | inv-bleu foncé | Z | 46.5 | 74.1 | -6.8 | -7.9 | 10.6 | 39.3 | -3.9 | -11.6 | 28.9 | 67.6 | 0.7 |
| C22 | comp-bleu foncé | Z | 49.1 | 75.9 | -8.4 | -7.7 | 11.4 | 40.7 | -5.8 | -11.8 | 56.4 | 47.6 | 1,0 |
| C23 | inv-gris 'privacy' | Z | 6.9 | 31.2 | 1.2 | 0.9 | 4.4 | 25 | 0.1 | -0.7 | 56.1 | 53,0 | 0.1 |
| C24 | comp-gris'privacy' | z | 6.9 | 31.4 | -1.1 | 1.6 | 4.4 | 25 | -0.1 | -0.6 | 88.8 | 29.7 | 0.2 |

### Exemples 1 à 18 et exemples comparatifs C1 à C18

Différentes couches conformes à l'invention ont été combinées avec différents verres, dont certains, non-conformes à l'invention (notés comp-), ont une réflexion infrarouge RIR_{V} inférieure à 1.087 fois leur transmission lumineuse TL_{V}, et d'autres, conformes à l'invention (notés inv-), ont une réflexion infrarouge RIR_{V} supérieure ou égale à 1.087 fois leur transmission lumineuse TL_{V}. Les valeurs simulées de transmission et réflexion lumineuses, de couleurs en transmission et en réflexion, facteur solaire, sélectivité et absorption du vitrage feuilleté sont données dans le Tableau A.

Ces résultats montrent que l'utilisation combinée d'un verre ayant une réflexion infrarouge telle que RIR_{V} ≥ 1.087 * TL_{V} et d'une couche répondant à la relation TL_{C} ≥ 1.3 * TIR_{C} apporte, à TL équivalente, une diminution du facteur solaire, ou à tout le moins un facteur solaire similaire ou peu augmenté, en même temps qu'une absorption moindre. Ces combinaisons peuvent donc avantageusement être utilisées pour diminuer l'échauffement du film fonctionnel

Les exemples incluant les couches A, B, ou C, montrent que l'utilisation combinée d'un verre ayant une réflexion infrarouge telle que RIR_{V} ≥ 1.087 * TL_{V} et d'une couche répondant à la relation TL_{C} ≥ 0.76 * TIR_{C} apporte, à TL équivalente, une diminution du facteur solaire en même temps qu'une absorption moindre, et ce dans tous les cas de figures.

Les exemples incluant la couche D montrent d'autre part que l'utilisation combinée d'un verre ayant une réflexion infrarouge telle que RIR_{V} ≥ 1.087 * TL_{V} et d'une couche caractérisée par une réflexion infrarouge RIR_{C} dans la gamme RIR_{C} > 0.5 * (1-AIR_{C}) et RIR_{C} ≤ 0.76 * (1-AIR_{C}) n'apporte, à TL équivalente, qu'une faible augmentation du facteur solaire (de l'ordre de maximum 5%), acceptable dans certaines circonstances, mais toujours avec le bénéfice d'une absorption moindre et donc d'un échauffement réduit.

### Exemples comparatifs C19 à C24

Une couche non-conforme à l'invention a été combinée avec différents verres, dont certains, non-conformes à l'invention (notés comp-), et d'autres, conformes à l'invention (notés inv-). Les valeurs simulées de transmission et réflexion lumineuses, de couleurs en transmission et en réflexion, facteur solaire, sélectivité et absorption du vitrage feuilleté sont données dans le Tableau B.

Ces exemples comparatifs montrent que l'utilisation combinée d'un verre ayant une réflexion infrarouge telle que RIR_{V} ≥ 1.087 * TL_{V} et d'une couche ne répondant pas à la relation TL_{C} ≥ 1.3 * TIR_{C} apporte, à TL équivalente, une nette augmentation du facteur solaire (de l'ordre de 20%) et une sélectivité clairement diminuée, ce qui ne les rend intéressant dans le cadre de son utilisation pour protéger le film fonctionnel contre l'échauffement et la chaleur.

Selon une mise en oeuvre particulière de l'invention, la première et éventuellement la seconde feuille de verre, peut être une feuille de verre colorée fortement absorbant dans la gamme de longueur d'onde visible (faible TLv), mais toujours garantissant une RIR_{V} ≥ 1.087 * TL_{V}, de telle sorte que la transmission lumineuse soit limitée par le seul effet de ces deux feuilles par exemple à moins de 50%, et dans une configuration de ce type de préférence à moins de 30%. La seconde feuille de verre peut cependant également être une feuille de verre colorée de l'état de l'art.

A titre d'exemple un vitrage pour automobile et en particulier un vitrage pour toit vitré selon l'invention peut présenter la structure suivante de l'extérieur vers l'intérieur
- feuille de verre de 2,1 mm d'épaisseur présentant une réflexion infrarouge RIR_{V} telle que RIR_{V} ≥ 1.087 * TL_{V}, TL_{V} étant la transmission lumineuse de la feuille de verre,
- une couche d'argent en tant que moyen réfléchissant les infrarouges présentant une transmission lumineuse TL_{C} telle que TL_{C} ≥ 1.3 * TIR_{C}, TIR_{C} étant la transmission infrarouge du moyen pour réfléchir les rayonnements infrarouges
- feuille de PVB faisant écran aux UV clair de 0,76mm
- feuille de PVB gris de 0,38mm
- film SPD (ou PDLC, electrochrome... couplé à un moyen permettant de l'alimenter électriquement)
- au minimum deux intercalaires thermoplastiques renfermant notamment le moyen d'activation du film SPD
- feuille de verre clair de 3,15mm, revêtue d'un système de couches low-e composé comme indiqué ci-dessus d'une couche de silice recouverte d'une couche d'oxyde d'étain dopé.
- Une bande d'occultation d'émail.

Le film SPD est alimenté en courant AC de 50Hz, et sous une différence de potentiel qui s'élève à 110v.

Un vitrage feuilleté selon l'invention peut être monté dans n'importe quelle vitre d'un véhicule ou encore d'un bâtiment.

Il peut être particulièrement et préférentiellement utilisé comme un toit vitré d'automobile.

A titre d'exemple, la RE a été mesurée à partir de vitrages feuilletés selon l'art antérieur avec des épaisseurs différentes et comparée avec un vitrage selon l'invention.

Le vitrage selon l'art antérieur comprend l'empilement suivant : Verre extra-clair/couche triple Argent (répondant à la condition TL_{C} ≥ 1.3 * TIR_{C} )/PVB0.76mm/SPD/verre clair et d'un vitrage feuilleté selon l'invention comprenant l'assemblage suivant : feuille de verre présentant une réflexion infrarouge RIR_{V} telle que RIR_{V} ≥ 1.087 * TL_{V}, TL_{V} étant la transmission lumineuse de la feuille de verre (= inv-clair dont les propriétés sont résumées dans le tableau I))/couche triple Argent(répondant à la condition TL_{C} ≥ 1.3 * TIR_{C}) PVB0.76mm/SPD/verre clair.

| **épaisseur. (mm)** | **type de verre** | **RE (%)** | **Delta (%)** |
|---|---|---|---|
| 1,1 | extra-clair | 49,3 | 0,4 |
| | inv-clair | 49,7 | |
| 1,6 | extra-clair | 49,1 | 0,6 |
| | inv-clair | 49,7 | |
| 2,1 | extra-clair | 48,8 | 0,8 |
| | inv-clair | 49,6 | |
| 2,6 | extra-clair | 48,6 | 0,9 |
| | inv-clair | 49,5 | |
| 3,2 | extra-clair | 48,3 | 1,1 |
| | inv-clair | 49,4 | |
| | + Ag3 + Clear PVB 0.76 + verre clair 50mm | | |

Ces mesures permettent de traduire une diminution de l'échauffement du vitrage qui tend à protéger le film fonctionnel contre la chaleur car l'absorption et donc l'échauffement est diminué.

En effet, l'exemple ci-dessous montre une augmentation de la réflexion énergétique globale (RE) lorsque le vitrage feuilleté répond à la définition décrite ci-dessus. Ces valeurs traduisent une meilleure évacuation de l'énergie solaire et donc une limitation de l'échauffement au sein du vitrage. L'exemple montre également que l'effet est proportionnel à l'épaisseur du premier verre.

Par ailleurs, un vitrage feuilleté selon l'invention peut être pourvu d'une fonctionnalité supplémentaire, par l'inclusion d'éléments appropriés, tel qu'un revêtement hydrophile ou hydrophobe sur les faces 1 ou 4. Par exemple, les vitrages feuilletés, tels qu'utilisés comme pare-brise ou lunette arrière de véhicule automobile comportent de nombreuses fonctionnalités telles que: couche réfléchissant le rayonnement solaire, permettant ainsi d'abaisser la température du tableau de bord et la température ambiante dans l'habitacle, le support de rétroviseur intérieur, des bus-bars permettant d'amener un courant électrique, un réseau de fils chauffants, une bande supérieure filtrant le rayonnement solaire, à coloration éventuellement dégradée, un détecteur de pluie ....

## Revendications

1. Vitrage feuilleté (10) comprenant :
a. une première feuille de verre externe (11),
b. un film fonctionnel alimenté électriquement (12),
c. un moyen pour réfléchir les r infrarouges (13) disposé entre la première feuille de verre (11) et le film fonctionnel (12),
d. au moins un premier intercalaire thermoplastique (20) disposé entre le moyen pour réfléchir les rayonnements infrarouges (13) et le film fonctionnel (12),
e. une seconde feuille de verre interne(16),
**caractérisé en ce que** au moins la première feuille externe présente une réflexion infrarouge RIR_{V} telle que RIR_{V} ≥ 1.087 * TL_{V}, TL_{V} étant la transmission lumineuse de la feuille de verre, et **en ce que** le moyen pour réfléchir les infrarouges est **caractérisée par** une transmission lumineuse TL_{C} telle que TL_{C} ≥ 1.3 * TIR_{C}, TIR_{C} étant la transmission infrarouge du moyen pour réfléchir les rayonnements infrarouges.

2. Vitrage feuilleté (10) selon la revendication 1, **caractérisé en ce que** au moins la première feuille de verre présente une réflexion infrarouge RIR_{V} telle que RIR_{V} ≥ 1.087 * TL_{V} + 5.

3. Vitrage feuilleté (10) selon la revendication 1, **caractérisé en ce que** au moins la première feuille de verre externe présente une réflexion infrarouge RIR_{V} telle que RIR_{V} ≥ 0.510 * TL_{V} + 53.

4. Vitrage feuilleté (10) selon l'une quelconque des revendications 1 à 3, **caractérisé en ce que** au moins première feuille de verre (11) a une composition qui comprend, en une teneur exprimée en pourcentages en poids total de verre :
| | |
|---|---|
| Fer total (exprimé sous forme de Fe₂O₃) | 0,002 - 0,06% |
| Cr₂O₃ | 0,0001 - 0,06 %. |

5. Vitrage feuilleté (10) selon l'une quelconque des revendications 1 à 3, **caractérisé en ce que** au moins la première feuille de verre (11) a une composition qui comprend, en une teneur exprimée en pourcentages en poids total de verre :
| | |
|---|---|
| Fer total (exprimé sous forme de Fe₂O₃) | 0,002 - 0,06% |
| Cr₂O₃ | 0,0015 - 1 % |
| Co | 0,0001 - 1%. |

6. Vitrage feuilleté (10) selon l'une quelconque des revendications 1 à 3, **caractérisé en ce que** au moins la première feuille de verre (11) a une composition qui comprend, en une teneur exprimée en pourcentages en poids total de verre :
| | |
|---|---|
| Fer total (exprimé sous forme de Fe₂O₃) | 0,02 - 1% |
| Cr₂O₃ | 0,002 - 0,5% |
| Co | 0,0001 - 0,5%. |

7. Vitrage feuilleté (10) selon l'une quelconque des revendications 1 à 3, **caractérisé en ce que** au moins la première feuille de verre (11) a une composition qui comprend, en une teneur exprimée en pourcentages en poids total de verre :
| | |
|---|---|
| Fer total (exprimé sous forme de Fe₂O₃) | 0,002 - 1% |
| Cr₂O₃ | 0,001 - 0,5% |
| Co | 0,0001 - 0,5%. |
| Se | 0,0003 - 0,5%. |

8. Vitrage feuilleté (10) selon l'une quelconque des revendications précédentes, **caractérisé en ce que** le moyen pour réfléchir les infrarouges (13) est une couche réfléchissant les infrarouges **caractérisée par** une réflexion infrarouge RIR_{C} telle que RIR_{C} > 0.5 * (1-AIR_{C}).

9. Vitrage feuilleté (10) selon la revendication 8 **caractérisé en ce que** la couche réfléchissant les infrarouges est **caractérisée par** une réflexion infrarouge RIR_{C} telle que RIR_{C} > 0.76 * (1-AIR_{C}).

10. Vitrage feuilleté (10) selon l'une quelconque des revendications 8 à 9, **caractérisé en ce que** la couche réfléchissant les infrarouges (13) est un empilage multicouche comprenant n couche(s) fonctionnelle(s) à base d'un matériau réfléchissant le rayonnement infrarouge, avec n ≥ 1, et n+1 revêtements diélectriques de telle sorte que chaque couche fonctionnelle est entourée par des revêtements diélectriques.

11. Vitrage feuilleté (10) selon l'une quelconque des revendications précédentes, **caractérisé en ce que** le moyen pour réfléchir les infrarouges (13) est à base d'argent.

12. Vitrage feuilleté (10) selon l'une quelconque des revendications précédentes, **caractérisé en ce que** le film fonctionnel (12) est altérable à une température élevée supérieure à 60°C.

13. Vitrage feuilleté (10) selon l'une quelconque des revendications précédentes, **caractérisé en ce que** le au moins un premier intercalaire thermoplastique (20) est disposé substantiellement sur toute la surface du vitrage.

14. Vitrage feuilleté (10) selon l'une quelconque des revendications précédentes, **caractérisé en ce que** le au moins un premier intercalaire thermoplastique (20) est une feuille de poly vinyl butyral ou d'éthylène-acétate de vinyl.

15. Vitrage feuilleté (10) selon l'une quelconque des revendications précédentes, **caractérisé en ce que** le film fonctionnel (12) est un film à cristaux liquides ou un film à particules dispersées en suspension ou une électrochrome.

16. Vitrage feuilleté (10) selon l'une quelconque des revendications précédentes, **caractérisé en ce que** le vitrage est un toit vitré pour automobile.

17. Vitrage feuilleté (10) selon l'une quelconque des revendications précédentes, **caractérisé en ce que** le vitrage est monté sur un bâtiment.).
